# EUROPEAN PATENT APPLICATION

(11) **EP 4 239 707 A1**
(43) Date of publication of application: **06.09.2023**
(21) Application number: 23155285.2
(22) Date of filing: 07.02.2023
(51) Int. Cl.: H01M 4/04, B05C 9/00

(54) **MANUFACTURING METHOD AND DRYING APPARATUS OF ELECTRODE**

(30) Priority: 03.03.2022 KR 20220027639
(71) Applicant: SK On Co., Ltd., Seoul 03161 (KR)
(72) Inventor: KANG, Byung Chan, 34124 Daejeon (KR); KANG, Yong Hee, 34124 Daejeon (KR); JO, Byoung Wook, 34124 Daejeon (KR)
(74) Representative: Prüfer & Partner mbB Patentanwälte · Rechtsanwälte

(57) **Abstract**

According to embodiments of the present disclosure, a method of manufacturing an electrode includes applying slurry comprising an active material and a solvent on a current collector, and when a degree of drying of the slurry reaches a reference value while the current collector passes through a drying apparatus, drying the slurry using induction heating of an induction heating unit.

## Description

### BACKGROUND

### 1. Technical Field

The present disclosure relates to a manufacturing method and a drying apparatus of an electrode. Specifically, the present disclosure relates to a manufacturing method and a drying apparatus of an electrode for a secondary battery.

### 2. Related Art

Recently, demand for mobile devices such as smartphones, tablet PCs, and wireless earphones has been increasing. In addition, as development of electric vehicles, storage batteries for energy storage, robots, satellites, etc. is in full swing, research on high-performance secondary batteries capable of repeated charging and discharging as an energy source is actively underway. Representative secondary batteries are known as lithium secondary batteries, lead acid batteries, and alkali storage batteries.

The secondary battery may include electrodes and a separator. The separator may be disposed between two electrodes. The electrode may be a cathode or an anode. In addition, the separator may be disposed between the cathode and the anode.

The electrode may be manufactured through a process of drying after applying slurry to a current collector. In particular, cracks may occur on a surface of the electrode depending on a temperature at which the slurry is dried and an amount of solvent in the slurry. In addition, binder migration may occur, resulting in lithium plating (Li-plating) or increase in resistance. This may greatly affect performance of the secondary battery. Thus, while securing stable drying capacity without defects, a method of manufacturing high-capacity (or low-solid) electrodes and improving productivity is being sought.

### SUMMARY

Embodiments provide a manufacturing method and a drying apparatus of an electrode having stable drying ability and improved productivity.

In accordance with an aspect of the present disclosure, there is provided a method of manufacturing an electrode including applying slurry including an active material and a solvent on a current collector, and when a degree of drying of the slurry reaches a reference value while the current collector passes through a drying apparatus, drying the slurry using induction heating of an induction heating unit.

In accordance with another aspect of the present disclosure, there is provided a drying apparatus of an electrode including a drying chamber including a plurality of zones through which a current collector on which slurry is applied passes, and an induction heating unit disposed in a reference zone where a degree of drying of the slurry reaches a reference value among the plurality of zones, and configured to heat the slurry by induction heating while the current collector passes through the reference zone.

According to an embodiment, it is possible to provide a manufacturing method and a drying apparatus of an electrode having stable drying ability and improved productivity.

### BRIEF DESCRIPTION OF THE DRAWINGS

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey the scope of the example embodiments to those skilled in the art.

In the drawing figures, dimensions may be exaggerated for clarity of illustration. It will be understood that when an element is referred to as being "between" two elements, it can be the only element between the two elements, or one or more intervening elements may also be present. Like reference numerals refer to like elements throughout.
FIG. 1 is a schematic diagram for illustrating a manufacturing method and a drying apparatus of an electrode in accordance with an embodiment of the present disclosure.
FIG. 2 is a diagram for illustrating a manufacturing method and a drying apparatus of an electrode in accordance with an embodiment of the present disclosure.
FIG. 3 is a flowchart for illustrating a manufacturing method of an electrode in accordance with an embodiment of the present disclosure.

### DETAILED DESCRIPTION

The specific structural or functional description disclosed herein or in the application is merely illustrative for the purpose of describing embodiments according to the concept of the present disclosure. The embodiments according to the concept of the present disclosure can be implemented in various forms, and cannot be construed as limited to the embodiments set forth herein. In addition, the technical idea of the present disclosure is not construed as being limited to the embodiments described herein or in the application.

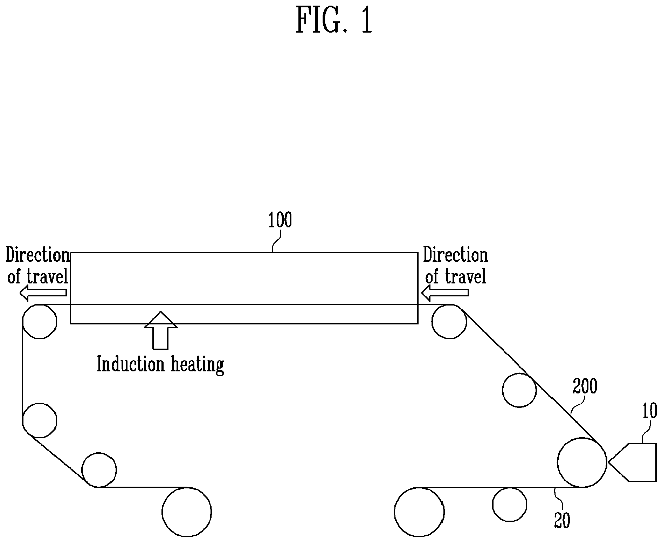

FIG. 1 is a schematic diagram for illustrating a manufacturing method and a drying apparatus of an electrode in accordance with an embodiment of the present disclosure.

Referring to FIG. 1, a current collector 20 may include at least one from the group consisting of copper, aluminum, stainless steel, titanium, and nickel. The current collector 20 may be implemented in a thin film structure such as a foil.

In one embodiment, the current collector 20 may be moved according to a direction of travel. For example, the current collector 20 may be moved by rotation of rollers. On the transported current collector 20, slurry supplied by a coating die 10 may be applied. The slurry may include solvents, conductive materials, active materials, and binders. The slurry may be a fluid having fluidity. The coating die 10 may be an apparatus for coating at a predetermined thickness on the current collector 20 traveling in the direction of travel by ejecting the slurry through a pulsationfree pump or a piston pump. Here, the current collector 20 to which the slurry is applied may be referred to as an electrode semi-finished product 200. In other words, the electrode semi-finished product 200 may be prepared by applying the slurry on the current collector 20. The electrode semi-finished product 200 may be an intermediate product used to manufacture the electrode.

In one embodiment, the electrode semi-finished product 200 may pass through a drying apparatus 100 according to the direction of travel. The drying apparatus 100 may manufacture an electrode by drying the electrode semi-finished product 200. For example, when the electrode semi-finished product 200 is put into the drying apparatus 100, the electrode semi-finished product 200 may be dried to manufacture the electrode. The electrode may be a cathode or an anode for a secondary battery. The secondary battery may be a lithium secondary battery, but may be various types of secondary batteries, including but not limited thereto.

In one embodiment, the drying apparatus 100 may dry the electrode semi-finished product 200 through hot air and induction heating. Hereinafter, the present disclosure will be described in detail.

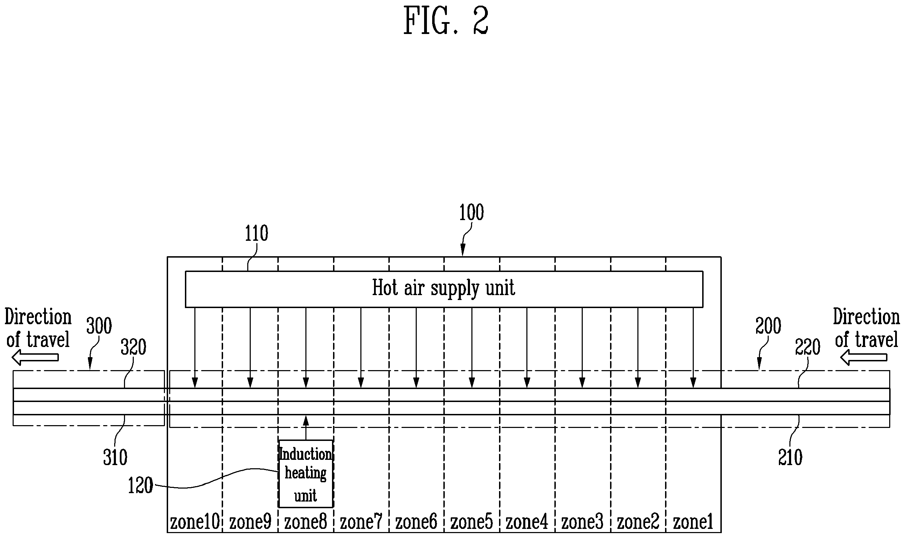

FIG. 2 is a diagram for illustrating a manufacturing method and a drying apparatus of an electrode in accordance with an embodiment of the present disclosure.

Referring to FIG. 2, the electrode semi-finished product 200 may include a current collector 210 and slurry 220.

The current collector 210 may receive electrons from the outside and transmit the electrons to an active material so that an electrochemical reaction occurs in the active material, or may receive electrons from the active material and transmit the electrons to the outside. For example, the current collector 210 may be implemented in a thin film structure such as a foil having a thickness of 5 µm or more, 6 µm or more, 8 µm or more, or 10 µm or more. Alternatively, the current collector 210 may be implemented in a thin film structure such as a foil having a thickness of 500 µm or less, 400 µm or less, 300 µm or less, 200 µm or less, 100 µm or less, or 50 µm or less. For example, the current collector 210 may include at least one from the group consisting of copper, aluminum, stainless steel, titanium, and nickel. In addition, the current collector 210 may include materials such as various metals having high conductivity.

The slurry 220 may be applied on the current collector 210. In one embodiment, the slurry 220 may be applied on at least one surface of the current collector 210. For example, the slurry 220 may be applied on one or both sides of the current collector 210.

The slurry 220 may include a solvent, active materials, a conductive material, and a binder. The slurry 220 may be prepared by mixing the active materials, the conductive material, and the binder in the solvent.

The solvent may disperse the active materials, the conductive material, and the binder. In one embodiment, the solvent may be a liquid material at room temperature (about 25 °C). For example, the solvent may be distilled water or deionized water (Di-water). The deionized water means water in a liquid state from which all impurities (e.g., ions, etc.) have been removed. The solvent may vary depending on types of materials of the active materials, the conductive material, and the binder.

The active materials may be divided into cathode and anode active materials according to type.

In one embodiment, the cathode active material that is a cathode type may include a material into which lithium (Li) ions may be inserted and deintercalated. The cathode active material may be lithium metal oxide. For example, the cathode active material may include at least one from the group consisting of lithium manganese oxide, lithium nickel oxide, lithium cobalt oxide, lithium nickel manganese oxide, lithium nickel cobalt manganese oxide, lithium nickel cobalt aluminum oxide, lithium iron phosphate compound, lithium phosphate manganese compound, lithium phosphate cobalt compound, and lithium phosphate vanadium compound, but is not limited to a particular example. The electrode semi-finished product 200 including the cathode active material of the cathode type may be used to manufacture a cathode type electrode 300.

In one embodiment, the anode active material of the anode type may be a material in which lithium ions may be intercalated and deintercalated. For example, the anode active material may include at least one from a group consisting of carbon-based materials such as natural graphite, artificial graphite, crystalline carbon, amorphous carbon, carbon composites, and carbon fibers, a lithium alloy, silicon (Si), and tin (Sn). According to one embodiment, the anode active material may be a material in which natural graphite and artificial graphite are mixed in a certain proportion, but is not limited to a specific example. The electrode semi-finished product 200 including the anode active material of the anode type may be used to manufacture an anode type electrode 300.

The conductive material may be a material having electrical conductivity. The conductive material may be used without special restrictions as long as it is a material that does not cause chemical changes and has electrical conductivity. For example, the conductive material may include at least one from a group consisting of a carbon-based material such as natural graphite, artificial graphite, carbon nanotubes (CNT), or graphene, metal powder such as copper, nickel, aluminum, or silver, metal fibers, or conductive polymers such as polyphenylene derivatives.

The binder may attach the active material and the conductive material to the current collector 210. For example, the binder may include styrene butadiene rubber (SBR), polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonation-EPDM, fluorine rubber, or various copolymers thereof, and one or any mixture of two or more thereof may be used. Depending on the type of material included in the active material or the conductive material, the type of material included in the binder may vary.

The electrode semi-finished product 200 may vary the type of material included in the current collector 210 and the slurry 220 respectively according to the type of electrode 300 to be manufactured. The electrode 300 may be the cathode or anode.

The current collector 210 to which the slurry 220 is applied may pass through the drying apparatus 100. For example, the electrode semi-finished product 200 may be fed into the drying apparatus 100. The electrode semi-finished product 200 may be dried while passing through the drying apparatus 100. Drying of the electrode semi-finished product 200 is completed so that the electrode 300 can be manufactured.

The drying apparatus 100 may dry the slurry 220. For example, the drying apparatus 100 may gradually dry the slurry 220 to solidify. The degree of drying may be expressed in solids (%).

The drying apparatus 100 may include a hot air supply unit 110 and an induction heating unit 120.

The hot air supply unit 110 may supply hot air to the slurry 220 of the electrode semi-finished product 200 while the electrode semi-finished product 200 passes therethrough. In other words, the hot air may gradually vaporize the solvent of the slurry 220. The vaporized solvent may escape from the electrode 200. The vaporized solvent may be discharged to the outside of the drying apparatus 100.

In one embodiment, the hot air supply unit 110 may include a boiler and a circulation fan. The boiler may be a heating apparatus using a heat transfer fluid. The heat transfer fluid may be a fluid other than water vapor or water and has a high heat transfer coefficient at high temperatures. The boiler may generate high-temperature hot air by heating the air using the heat transfer fluid. The circulation fan may generate air flow. For example, the circulation fan may include a motor and a rotary blade. When rotational force of the motor is transmitted to the rotary blade, the rotary blade may rotate to generate the air flow. In one embodiment, the circulation fan may supply the hot air to the slurry 220 and discharge the vaporized solvent from the slurry 220 to the outside of a drying chamber. The circulation fan may be connected to a nozzle disposed in at least one of upper and lower parts of the drying chamber. For example, the nozzle may be configured in the form of a perforated nozzle, a slit nozzle, but is not limited thereto. In other words, the hot air supply unit 110 may dry the electrode semi-finished product 200 through convection heat transfer.

The induction heating unit 120 may heat the slurry 220 through induction heating. Induction heating may be a heating method using Faraday-Lenz's electromagnetic induction phenomenon. For example, the induction heating unit 120 may include an induction coil. In this case, the induction coil may be installed spirally. When a high-frequency current is applied to the induction coil, a magnetic flux is formed, and an induced current may be generated by the magnetic flux. The induced current may generate Joule heat, and the inside of the slurry 220 may be heated according to the Joule heat. For example, the frequency of the high-frequency current may be 20 kHz to 35 kHz. However, this is merely an embodiment, and the frequency of the high-frequency current may be changed into various values. Here, induction heating has the technical effect of concentrating energy on a part to be heated, enabling efficient rapid heating and enabling rapid and uniform control.

The induction heating unit 120 may be heated in a state where it is not in contact with the slurry 220. In one embodiment, the induction heating unit 120 may be disposed so that the slurry 220 faces one side of the current collector 210 to which it is applied. For example, the induction heating unit 120 may be disposed so that the slurry 220 is between the current collector 210 and the induction heating unit 120. In another embodiment, the induction heating unit 120 may be disposed so that the slurry 220 faces one side different from the one side of the current collector 210 to which it is applied. For example, the induction heating unit 120 may be disposed such that the current collector 210 is between the slurry 220 and the induction heating unit 120.

In one embodiment, the drying apparatus 100 may include a drying chamber. The drying chamber may include a plurality of zones (zone1 to zone10). For example, the length of each of the plurality of zones (zone 1 to zone10) may be 5 m.

Each of the plurality of zones (zone 1 to zone10) may be an area through which the electrode semi-finished product 200 passes. The electrode semi-finished product 200 may be dried while passing through respective zones (zone1 to zone10). In other words, each of the plurality of zones (zone1 to zone10) may represent a dry section in which the slurry 220 is dried. While the electrode semi-finished product 200 passes through each of the plurality of zones (zone1 to zone10), the slurry 220 of the electrode semi-finished product 200 may be dried through hot air. In other words, while the electrode semi-finished product 200 passes through each of the plurality of zones (zone 1 to zone10) in order according to the direction of travel, the degree to which the slurry 220 is dried may gradually increase.

In at least one of the plurality of zones (zone1 to zone10), the hot air may be supplied to the slurry 220 by the hot air supply unit 110. Each of the plurality of zones (zone 1 to zone10) may correspond to the degree to which the electrode semi-finished product 200 or the slurry 220 is dried. For example, the first zone (zone1) is a zone in which the slurry 220 is dried from 0% to 10% while the slurry 220 passes therethrough, the second zone (zone2) is a zone in which the slurry 220 is dried from 10% to 20%, and the third zone (zone3) is a zone in which the slurry 220 is dried from 20% to 30%. In a similar manner, the eighth zone (zone8) is a zone in which the slurry 220 is dried from 70% to 80%, the ninth zone (zone9) is a zone in which the slurry 220 is dried from 80% to 90%, and the tenth zone (zone 10) is a zone in which the slurry 220 is dried from 90% to 100%. Here, the degree of drying in each zone (zone 1 to zone 10) may vary depending on the temperature of the hot air provided in each zone (zone 1 to zone 10), the size of each zone (zone 1 to zone 10), but is not limited thereto. In other words, the temperature and wind speed of the hot air of each zone (zone 1 to zone 10) may be set independently.

The induction heating unit 120 may be disposed in a reference zone among the plurality of zones (zone 1 to zone 10) of the drying chamber. The induction heating unit 120 may heat the slurry 220 in an induction heating manner while the slurry 220 passes through the reference zone. For example, the reference zone may be the eighth zone (zone8).

In one embodiment, the induction heating unit 120 may be located in the center portion within the reference zone. The center portion may be a position for induction heating a center region among side regions and the center region of the electrode semi-finished product 200. The induction heating unit 120 may be disposed in the center portion within the reference zone to induction heat the center region of the electrode semi-finished product 200 passing through the reference zone. Accordingly, deviation of drying between the side regions and the center region of the electrode semi-finished product 200 may be reduced.

In one embodiment, the reference zone may be a zone among the plurality of zones (zone1 to zone 10) in which the degree to which the solvent of the slurry 220 is dried by the hot air reaches a reference value. On the other hand, in FIG. 2, the number of the zones (zone 1 to zone 10) is shown as being 10, but this is merely an embodiment and may be modified into various numbers. In addition, the degree of drying corresponding to each zone (zone1 to zone10) may be variously modified.

In one embodiment, the drying apparatus 100 may further include a controller. The controller may control overall operation of the drying apparatus 100. For example, the controller may control the temperature of the hot air and the revolutions per minute (rpm) of the circulation fan. The controller may control the output (kW) of the induction heating unit 120.

The electrode 300 may be manufactured by drying the electrode semi-finished product 200. The electrode 300 may be an electrode used in a secondary battery. In one embodiment, the secondary battery may be a lithium secondary battery but is not limited thereto.

The electrode 300 may include a current collector 310 and a coating layer 320. The electrode 300 may be classified into one of a cathode and an anode depending on the type. Depending on the type of the electrode 300, the type of material included in each of the current collector 310 and the coating layer 320 may vary.

The current collector 310 may be obtained by drying the current collector 210. In one embodiment, the current collector 310 may have the same material and structure as the current collector 210. The description of the current collector 210 as above may be equally applied to the current collector 310.

The coating layer 320 may include an active material, a conductive material, and a binder. The coating layer 320 may be obtained by drying the slurry 220. For example, the coating layer 320 may be the slurry 220 from which the solvent has been removed among the solvent, active material, conductive material, and binder included in the slurry 220.

In one embodiment, the reference value may be determined according to experimentally obtained data.

In one embodiment, the reference value may be included within a range greater than 65% and less than 100%. For example, the reference zone may be one of zones present between a zone corresponding to 65% of the degree to which the solvent of the slurry 220 is dried by the hot air and a zone corresponding to 100% of the degree to which the solvent of the slurry 220 is dried by the hot air.

In one embodiment, the reference value may be included within a range greater than 72.5% and less than 95%. For example, the reference zone may be one of zones present between a zone corresponding to 72.5% of the degree to which the solvent of the slurry 220 is dried by the hot air and a zone corresponding to 95% of the degree to which the solvent of the slurry 220 is dried by the hot air.

In one embodiment, the reference value may be included within a range of 80% or more and 90% or less. For example, the reference zone may be a zone corresponding to 80% of the degree to which the solvent of the slurry 220 is dried by the hot air, a zone corresponding to 90%, and one of the zones present therebetween.

In one embodiment, an output value of the induction heating unit 120 may be determined according to experimentally obtained data.

In one embodiment, the controller may control the output of the induction heating unit 120 to a value within a range of 2.4 kW to 3.2 kW. Specifically, the controller may control the output of the induction heating unit 120 to a value included in a range greater than 2.4 kW and less than 3.2 kW.

In one embodiment, the controller may control the output of the induction heating unit 120 to a value within a range of 2.6 kW to 3.0 kW. Specifically, the controller may control the output of the induction heating unit 120 to a value included in a range greater than 2.6 kW and less than 3.0 kW.

On the other hand, when the slurry 220 is dried only by the hot air, it is difficult to dry the inside of the slurry 220 because the hot air transfers heat from the surface of the slurry 220. In particular, when a loading amount of the active material is increased to improve an energy density, the thickness of the slurry 220 becomes relatively thicker and a unit amount of the solvent to be dried increases. This structure may make it difficult to dry the inside of the slurry 220. At this time, when the drying temperature is increased, thermal wrinkles or curls may occur due to thermal expansion of the current collector 210.

In addition, the slurry 220 applied on the current collector 210 may differ in the loading amount according to the region, such as the center region and the side regions. In this case, the center region of the slurry 220 is dried to an appropriate level, but the side regions of the slurry 220 may crack due to overdrying on the surface. Alternatively, the side regions of the slurry 220 may be dried to an appropriate level, but the center region of the slurry 220 may not be dried to an appropriate level. In this case, there is a method of drying at a low drying speed, but there is a problem that productivity is reduced.

According to an embodiment of the present disclosure, the drying apparatus 100 may dry the slurry 220 through induction heating of the induction heating unit 120 disposed in the reference zone as well as the hot air. This allows an electrode manufacturing speed and productivity to be improved stably without defects. In particular, since the inside of the slurry 220 may be efficiently dried through induction heating, defects generated by a difference in the amount of heat transferred to the surface and the inside may be prevented.

In addition, according to an embodiment of the present disclosure, deviation of a drying rate between the center region and the side regions may be reduced even when the drying rate increases with an increase of a movement speed. By preventing binder migration due to rapid drying, electrode quality such as adhesion may be prevented from deteriorating.

Hereinafter, resulting data according to various design conditions will be described.

Table 1 below shows design conditions of each example, and Table 2 below shows result data of each example. Examples 1A to 1C are examples of drying the electrode semi-finished product 200 through hot air and induction heating. Examples 1B and 1C each exhibit drying conditions (movement speed, solids, loading amount, output, hot air temperature, etc.) that are more difficult to dry normally compared to Example 1A. Examples 2A to 2C are examples for drying the electrode semi-finished product 200 through hot air. Examples 2B and 2C each exhibit drying conditions (movement speed, solids, loading amount, hot air temperature, etc.) that are more difficult to dry normally compared to Example 2A.

**TABLE 1**

| Examples | Movement speed (m/min) | Solids (%) | Loading amount (mg/cm²) | Output (kW) | Hot air temperature (°C) |
|---|---|---|---|---|---|
| 1A | 10 | 50 | 10 | 4.0 | 80 |
| 1B | 10 | 40 | 13 | 8.5 | 120 |
| 1C | 15 | 40 | 10 | 7.0 | 110 |
| 2A | 10 | 50 | 10 | 0 | 100 |
| 2B | 10 | 40 | 13 | 0 | 150 |
| 2C | 15 | 40 | 10 | 0 | 140 |

In Table 1, the movement speed indicates the distance that the electrode semi-finished product 200 travels per unit time. In other words, the higher the movement speed, the less time to stay inside the drying apparatus 100. The solids may indicate the degree to which the slurry 220 has dried or the amount of solvent contained in the slurry 220. For example, a higher % of solids may indicate a greater degree of drying, or a smaller amount of solvent contained in the slurry 220. The loading amount may indicate the mass per unit area to which the slurry 220 or active material is applied. The output indicates an output of the induction heating unit 120, and the hot air temperature may indicate the temperature of the hot air provided by the hot air supply unit 110.

**TABLE 2**

| Examples | Completion of drying | | Electrode adhesion | Defectiveness |
|---|---|---|---|---|
| | Center region | Side | | |
| 1A | ○ | ○ | 0.21 | X |
| 1B | ○ | ○ | 0.19 | X |
| 1C | ○ | ○ | 0.20 | X |
| 2A | ○ | ○ | 0.20 | X |
| 2B | X | ○ | 0.12 | ○ (center region: undried) (side region: crack) |
| 2C | X | ○ | 0.14 | ○ (center region: undried) (side region: crack) |

In Table 2, O of the completion of drying indicates that the slurry 220 of the corresponding example is completely dried (i.e., the solvent is completely vaporized), and X of the completion of drying indicates that the slurry 220 is not completely dried (i.e., the solvent is not completely vaporized). In particular, the completion of drying may vary for each region. For example, the center region of the electrode semi-finished product 200 may not dry sufficiently to cause undried defects, or the side regions of the electrode semi-finished product 200 may be overdried and crack failure may occur. This is because the drying speed of the side areas is faster than the drying speed of the center region. The electrode adhesion may be an indicator of the quality of the electrode or whether binder migration occurs. The binder migration refers to the phenomenon of the binder moving according to the movement of the solvent as the solvent dries on the surface. O of the defectiveness indicates that a phenomenon that adversely affects the quality of the electrode occurs, and X of the defectiveness indicates that the quality of the electrode is normal.

In the case of Example 1A, 5 parts by weight of graphite conductive agent, 1.2 parts by weight of carboxymethylcellulose, 1.5 parts by weight of styrene-butadiene rubber, and pure water were added to the active material in which natural graphite and artificial graphite were mixed in a certain ratio to prepare the slurry 220 with 50% solids. The slurry 220 was uniformly applied on the current collector 210 of a 6 µm copper thin film at a loading amount of 10 mg/cm2. The current collector 210 to which the slurry 220 was applied was passed into the interior of the drying apparatus 100 at a movement speed of 10 m/min. Inside the drying apparatus 100, the current collector 210 to which the slurry 220 was applied was heated by the induction heating unit 120 having an output of 4.0 kW, and then hot air of 80 °C was supplied to prepare the electrode 300. The final electrode was manufactured by rolling the electrode 300 using a roll press rolling facility. In the case of Example 1A, the center region and the side regions were normally dried as shown in Table 2, and the electrode adhesion was similar even though the hot air temperature was lower compared to Example 2A.

In the case of Example 1B, 5 parts by weight of graphite conductive agent, 1.2 parts by weight of carboxymethylcellulose, 1.5 parts by weight of styrene-butadiene rubber, and pure water were added to the active material in which natural graphite and artificial graphite were mixed in a certain ratio to prepare the slurry 220 with 40% solids. The slurry 220 was uniformly applied on the current collector 210 of the 6 µm copper thin film at a loading amount of 13 mg/cm2. The current collector 210 to which the slurry 220 was applied was passed into the interior of the drying apparatus 100 at a movement speed of 10 m/min. Inside the drying apparatus 100, the electrode 300 was manufactured by heating with the induction heating unit 120 with an output of 8.5 kW and then supplying hot air of 120 °C. The final electrode was manufactured by sufficiently rolling the electrode 300 using a roll press rolling facility. In the case of Example 1B, as shown in Table 2, the center region and the side regions were normally dried, and the electrode adhesion was slightly reduced compared to Example 1A, but the result was similar to Example 1A with a value within a tolerance range.

In the case of Example 1C, 5 parts by weight of graphite conductive agent, 1.2 parts by weight of carboxymethylcellulose, 1.5 parts by weight of styrene-butadiene rubber, and pure water were added to the active material in which natural graphite and artificial graphite were mixed in a certain ratio to prepare the slurry 220 with 40% solids. The slurry 220 was uniformly applied on the current collector 210 of the 6 µm copper thin film at a loading amount of 10 mg/cm2. The current collector 210 to which the slurry 220 was applied was passed into the interior of the drying apparatus 100 at a movement speed of 15m/min. Inside the drying apparatus 100, the electrode 300 was manufactured by heating with an induction heating unit 120 having an output of 7.0 kW and then supplying hot air of 110 °C. The final electrode was manufactured by sufficiently rolling the electrode 300 using the roll press rolling facility. In the case of Example 1C, as shown in Table 2, the center region and the side regions were normally dried, and the electrode adhesion was slightly reduced compared to Example 1A, but the result was similar to Example 1A with a value within the tolerance range.

In the case of Example 2A, 5 parts by weight of graphite conductive agent, 1.2 parts by weight of carboxymethylcellulose, 1.5 parts by weight of styrene-butadiene rubber, and pure water were added to the active material in which natural graphite and artificial graphite were mixed in a certain ratio to prepare the slurry 220 with 50% solids. The slurry 220 was uniformly applied on the current collector 210 of the 6 µm copper thin film at a loading amount of 10 mg/cm2. The current collector 210 to which the slurry 220 was applied was passed into the interior of the drying apparatus 100 at a movement speed of 10 m/min. Inside the drying apparatus 100, the electrode 300 was manufactured by supplying hot air of 100 °C without use of the induction heating unit 120. The final electrode was manufactured by sufficiently rolling the electrode 300 using the roll press rolling facility. In the case of Example 2A, the center region and the side regions were normally dried as shown in Table 2.

In the case of Example 2B, 5 parts by weight of graphite conductive agent, 1.2 parts by weight of carboxymethylcellulose, 1.5 parts by weight of styrene-butadiene rubber, and pure water were added to the active material in which natural graphite and artificial graphite were mixed in a certain ratio to prepare the slurry 220 with 40% solids. The slurry 220 was uniformly applied on the current collector 210 of the 6 µm copper thin film at a loading amount of 13 mg/cm2. The current collector 210 to which the slurry 220 was applied was passed into the interior of the drying apparatus 100 at a movement speed of 10 m / min. Inside the drying apparatus 100, the electrode 300 was manufactured by supplying hot air of 150 °C without use of the induction heating unit 120. The final electrode was manufactured by sufficiently rolling the electrode 300 using the roll press rolling facility. In the case of Example 2B, as shown in Table 2, an undried defect occurred in the center region and a crack defect occurred in the side regions. In addition, in the case of Example 2B, the problem that the electrode adhesion was reduced compared to Example 2A occurred.

In the case of Example 2C, 5 parts by weight of graphite conductive agent, 1.2 parts by weight of carboxymethylcellulose, 1.5 parts by weight of styrene-butadiene rubber, and pure water were added to the active material in which natural graphite and artificial graphite were mixed in a certain ratio to prepare the slurry 220 with 40% solids. The slurry 220 was uniformly applied on the current collector 210 of the 6 µm copper thin film at a loading amount of 10 mg/cm2. The current collector 210 to which the slurry 220 was applied was passed into the interior of the drying apparatus 100 at a movement speed of 15m/min. Inside the drying apparatus 100, the electrode 300 was manufactured by supplying hot air of 140 °C without use of the induction heating unit 120. The final electrode was manufactured by sufficiently rolling the electrode 300 using the roll press rolling facility. In the case of Example 2C, as shown in Table 2, an undried defect occurred in the center region and a crack defect occurred in the side regions. In addition, in the case of Example 2C, the problem that the electrode adhesion was reduced compared to Example 2A occurred.

As in Example 1A, even at the relatively low movement speed, high solids, and low loading amount, the slurry 220 could be completely dried through hot air and induction heating that significantly lowered the temperature. As in Example 1B, even with the relatively low solids and high loading amount, the slurry 220 could be completely dried through low temperature hot air and induction heating. As in Example 1C, even with the relatively low solids and high movement speed, the slurry 220 could be completely dried through low temperature hot air and induction heating. Compared to Examples 2A to 2C, where one of the movement speed, solids, and loading amount was relatively high, Examples 1A to 1C were able to quickly complete drying while maintaining electrode adhesion without defects even at low hot air temperature.

In addition, in the case of Example 2A, no defects occurred, but in the case of Examples 2B and 2C, defects occurred. In other words, even when drying is performed under the dry conditions such as Example 2A, if the drying conditions are temporarily changed due to various causes, there is a possibility of defects. On the other hand, in the case of Example 1A, since no defects occurred even when the drying conditions are changed as in Examples 1B and 1C, there is an advantage that defects are less likely to occur than in Example 2A.

In addition, in the case of hot air drying, drying may be achieved through transfer of convection heat. For example, the convection heat may be transferred from the surface of the slurry 220 to the inside to proceed with drying. In addition, drying may proceed from the side region of the electrode semi-finished product 200 to the center region through the transfer of convection heat. In one embodiment, when the electrode semi-finished product 200 is dried at a low drying speed using hot air, special conditions such as defects may not occur. In another embodiment, when the amount of solvent to be dried per unit time, such as an increase in solids or an increase in movement speed, an imbalance in drying may occur in which the degree of drying varies depending on the regions. For example, in the side regions, cracks may occur on the surface according to overdrying, and undrying may occur in which the interior of the center region is not completely dry. According to an embodiment of the present disclosure, the induction heating unit 120 may be used to improve a drying ability so that drying may proceed not only on the surface of the slurry 220 but also inside the slurry 220. According to an embodiment of the present disclosure, the induction heating unit 120 may be used to resolve the drying deviation between the side regions and the center region.

Table 3 below shows the design conditions of each example, and Table 4 below is a table showing result data of each example.

**TABLE 3**

| Examples | Output (kW) | Solids (%) | Loading amount (mg/cm²) | Width (mm) | Length (mm) |
|---|---|---|---|---|---|
| 3A | 1.5 | 50 | 10 | 100 | 100 |
| 3B | 1.5 | 65 | 10 | 100 | 100 |
| 3C | 1.5 | 80 | 10 | 100 | 100 |
| 4A | 2.0 | 50 | 10 | 100 | 100 |
| 4B | 2.0 | 65 | 10 | 100 | 100 |
| 4C | 2.0 | 80 | 10 | 100 | 100 |
| 5A | 2.4 | 50 | 10 | 100 | 100 |
| 5B | 2.4 | 65 | 10 | 100 | 100 |
| 5C | 2.4 | 80 | 10 | 100 | 100 |
| 6A | 2.8 | 50 | 10 | 100 | 100 |
| 6B | 2.8 | 65 | 10 | 100 | 100 |
| 6C | 2.8 | 80 | 10 | 100 | 100 |
| 6D | 2.8 | 90 | 10 | 100 | 100 |
| 7A | 3.2 | 50 | 10 | 100 | 100 |
| 7B | 3.2 | 65 | 10 | 100 | 100 |
| 7C | 3.2 | 80 | 10 | 100 | 100 |
| 7D | 3.2 | 90 | 10 | 100 | 100 |

The width and length of Table 3 show the width and length of the electrode semi-finished product 200. Here, the solids may indicate the degree to which the slurry 220 has dried by the hot air. A detailed description of the output and loading amount will be omitted to the extent that it overlaps with the above description. Examples 3A to 7D dried the electrode semi-finished product 200 prepared with the same loading amount, width, and length through induction heating of the induction heating unit 120 under standard conditions (room temperature, standard air pressure) without hot air. According to the design conditions in which the output of the induction heating unit 120 and the % value of solids were different, result data as shown in Table 4 below could be obtained.

**TABLE 4**

| Examples | Defectiveness | Amount of solvent (mg/100 cm²) | Amount of evaporated solvent (mg/100 cm²) | Dried amount (%) | Solids after drying (%) |
|---|---|---|---|---|---|
| 3A | X | 500 | 33 | 7 | 68.17 |
| 3B | X | 350 | 17 | 5 | 75.02 |
| 3C | X | 200 | 19 | 9 | 84.67 |
| 4A | X | 500 | 58 | 12 | 69.35 |
| 4B | ○ (boiling) | 350 | 39 | 11 | 76.28 |
| 4C | X | 200 | 37 | 19 | 85.98 |
| 5A | ○ (boiling) | 500 | 174 | 35 | 75.41 |
| 5B | ○ (boiling) | 350 | 154 | 44 | 83.61 |
| 5C | X | 200 | 89 | 45 | 90.01 |
| 6A | ○ (boiling) | 500 | 299 | 60 | 83.26 |
| 6B | ○ (boiling) | 350 | 188 | 54 | 86.06 |
| 6C | X | 200 | 134 | 67 | 93.81 |
| 6D | X | 100 | 65 | 65 | 96.62 |
| 7A | ○ (boiling) | 500 | 400 | 80 | 90.91 |
| 7B | ○ (boiling) | 350 | 264 | 75 | 92.08 |
| 7C | ○ (crack) | 200 | 172 | 86 | 97.28 |
| 7D | ○ (crack) | 100 | 89 | 89 | 98.91 |

The amount of solvent indicates the mass of solvent per unit area before drying. The amount of evaporated solvent indicates the mass of the vaporized solvent due to drying per unit area. The dried amount may indicate a percentage of the ratio between the amount of evaporated solvent and an amount of residual solvent. The amount of residual solvent indicates the mass of the amount of solvent remaining after drying (i.e., the amount of solvent minus the amount of evaporated solvent). The solids after drying may indicate the degree to which the slurry 220 has dried or the amount of solvent included in the slurry 220 after drying.

As shown in Table 4, in the case of Examples 3A to 4C, the dried amount was relatively low. In the case of Examples 5A, 5B, 6A, 6B, and 7A to 7D, defects such as boiling or cracking occurred, respectively. In the case of Examples 6C and 6D, the dried amount was relatively high and no defects occurred.

Based on the experimental data as described above, the position and output of the induction heating unit 120 may be determined.

In one embodiment, the slurry 220 may be dried through induction heating in a range where the content of solids of the slurry 220 is greater than 65% and less than 100%. In other words, the induction heating unit 120 may be disposed in a zone between a zone where the degree to which the solvent of the slurry 220 is dried by the hot air in the drying apparatus 100 corresponds to 65% and a zone where the degree to which the solvent of the slurry 220 is dried by the hot air in the drying apparatus 100 corresponds to 100%.

In one embodiment, the slurry 220 may be dried through induction heating in a range where the content of solids of the slurry 220 is greater than 72.5% and less than 95%. In other words, the induction heating unit 120 may be disposed in a zone between a zone where the degree to which the solvent of the slurry 220 is dried by the hot air in the drying apparatus 100 corresponds to 72.5% and a zone where the degree to which the solvent of the slurry 220 is dried by the hot air in the drying apparatus 100 corresponds to 95%.

In one embodiment, the slurry 220 may be dried through induction heating in a range where the content of solids of the slurry 220 is 80% or more and 90% or less. In other words, the induction heating unit 120 may be disposed in one of a zone where the degree to which the solvent of the slurry 220 is dried by the hot air in the drying apparatus 100 corresponds to 80%, a zone where the degree to which the solvent of the slurry 220 is dried by the hot air in the drying apparatus 100 corresponds to 90%, and zones therebetween.

In one embodiment, the output of the induction heating unit 120 may be controlled to have a value included in a range greater than 2.4 kW and less than 3.2 kW. In one embodiment, the output of the induction heating unit 120 may be controlled to have a value included in a range greater than 2.6 kW and less than 3.0 kW.

According to an embodiment of the present disclosure, when the content of solids is less than a predetermined level (for example, 65% or 70%, etc.) and the output of the induction heating unit 120 is increased above a reference value (e.g., 1.8 kW or 2.0 kW, etc.), defects such as boiling of the solvent may occur. In other words, when the content of solids is less than the predetermined level, the output of the induction heating unit 120 should not be increased above the reference value to prevent boiling of the solvent. On the other hand, when the content of solids is equal to or greater than the predetermined level, even if the output of the induction heating unit 120 is increased above the reference value, the problem of boiling of the solvent may be prevented.

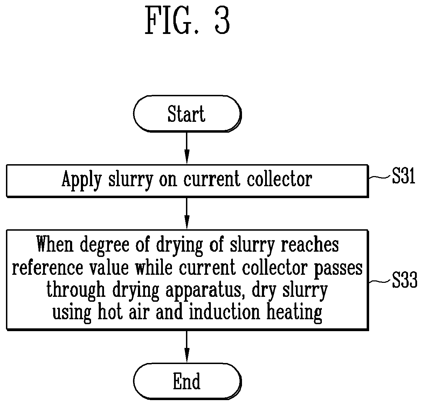

FIG. 3 is a flowchart for illustrating a manufacturing method of an electrode in accordance with an embodiment of the present disclosure.

Referring to FIG. 3, the manufacturing method of the electrode 300 for the secondary battery includes applying the slurry 220 including the active material and the solvent on the current collector 210 (S31), and when the degree of drying of the slurry 220 reaches a reference value while the current collector 210 passes through the drying apparatus 100, drying the slurry 220 using induction heating of the induction heating unit 120 (S33).

The slurry 220 may be applied on the current collector 210 (S31). For example, the current collector 210 may be moved by rotation of the roller. When the current collector 210 is moved under the die coater 10, the slurry ejected from the die coater 10 may be applied to the current collector 210.

In one embodiment, the slurry 220 may include the solvent, the active materials, the conductive material, and the binder. The active materials, conductive material and binder may be dispersed in the solvent.

When the degree of drying of the slurry 220 reaches the reference value while the current collector 210 passes through the drying apparatus 100, the slurry 220 may be dried using induction heating of the induction heating unit 120 (S33).

In one embodiment, the drying of the slurry 220 may include moving the current collector 210 to pass through the inside of the drying apparatus 100 and supplying hot air to the slurry 220 while the current collector 210 passes through the inside of the drying apparatus 100. For example, the hot air may be supplied by the hot air supply unit 110.

In one embodiment, the drying of the slurry 220 may include, while the current collector passes through a zone where the degree of drying of the slurry 220 reaches the reference value, drying the slurry 220 using induction heating of the induction heating unit 120 disposed in the zone and the hot air.

In one embodiment, the induction heating unit 120 may be disposed in the zone where the degree of drying of the slurry 220 reaches the reference value among a plurality of zones included in the drying apparatus 100. Each of the plurality of zones may correspond to the degree of drying of the slurry 220. The zone in which the degree of drying of the slurry 220 reaches the reference value may be the reference zone.

In one embodiment, the reference value may be included in a range greater than 65% and less than 100%.

In one embodiment, the reference value may be included in a range greater than 72.5% and less than 95%.

In one embodiment, the reference value may be included in a range of 80% or more and 90% or less.

In one embodiment, the output of the induction heating unit 120 may be greater than 2.4 kW and less than 3.2 kW.

In one embodiment, the output of the induction heating unit 120 may be greater than 2.6 kW and less than 3.0 kW.

While the present disclosure has been shown and described with reference to certain exemplary embodiments thereof, it will be understood by those skilled in the art that various changes in form and details may be made therein without departing from the spirit and scope of the present disclosure as defined by the appended claims and their equivalents. Therefore, the scope of the present disclosure should not be limited to the above-described exemplary embodiments but should be determined by not only the appended claims but also the equivalents thereof.

In the above-described embodiments, all steps may be selectively performed or part of the steps and may be omitted. In each embodiment, the steps are not necessarily performed in accordance with the described order and may be rearranged. The embodiments disclosed in this specification and drawings are only examples to facilitate an understanding of the present disclosure, and the present disclosure is not limited thereto. That is, it should be apparent to those skilled in the art that various modifications can be made on the basis of the technological scope of the present disclosure.

Meanwhile, the exemplary embodiments of the present disclosure have been described in the drawings and specification. Although specific terminologies are used here, those are only to explain the embodiments of the present disclosure. Therefore, the present disclosure is not restricted to the above-described embodiments and many variations are possible within the spirit and scope of the present disclosure. It should be apparent to those skilled in the art that various modifications can be made on the basis of the technological scope of the present disclosure in addition to the embodiments disclosed herein.

## Claims

1. A method of manufacturing an electrode, the method comprising:
applying slurry comprising an active material and a solvent on a current collector; and
when a degree of drying of the slurry reaches a reference value while the current collector passes through a drying apparatus, drying the slurry using induction heating of an induction heating unit.

2. The method of claim 1, wherein the induction heating unit is disposed in a reference zone where the degree of drying of the slurry reaches the reference value among a plurality of zones included in the drying apparatus.

3. The method of claim 1 or 2, wherein the reference value is included in a range greater than 65% and less than 100%, or in a range greater than 72.5% and less than 95%, or in a range of 80% or more and 90% or less.

4. The method of anyone of claims 1 to 3, wherein an output of the induction heating unit is greater than 2.4 kW and less than 3.2 kW.

5. The method of claim 4, wherein the output of the induction heating unit is greater than 2.6 kW and less than 3.0 kW.

6. The method of anyone of claims 1 to 5, wherein the drying of the slurry comprises:
moving the current collector to pass through the inside of the drying apparatus; and
supplying hot air to the slurry while the current collector passes through the inside of the drying apparatus.

7. The method of claim 6, wherein the drying of the slurry comprises, while the current collector passes through a zone where the degree of drying of the slurry reaches the reference value, drying the slurry using induction heating of the induction heating unit disposed in the zone and the hot air.

8. The method of anyone of claims 1 to 7, wherein the slurry comprises the active material, a conductive material, and a binder dispersed in the solvent.

9. A drying apparatus of an electrode, the drying apparatus comprising:
a drying chamber comprising a plurality of zones through which a current collector on which slurry is applied passes; and
an induction heating unit disposed in a reference zone where a degree of drying of the slurry reaches a reference value among the plurality of zones, and configured to heat the slurry by induction heating while the current collector passes through the reference zone.

10. The drying apparatus of claim 9, further comprising:
a hot air supply unit configured to supply hot air to the slurry while the current collector passes through at least one of the plurality of zones.

11. The drying apparatus of claim 9 or 10, wherein the reference value is included in a range greater than 65% and less than 100%.

12. The drying apparatus of claim 11, wherein the reference value is included in a range greater than 72.5% and less than 95%.

13. The drying apparatus of claim 12, wherein the reference value is included in a range of 80% or more and 90% or less.

14. The drying apparatus of any one of claims 11 to 13, further comprising:
a controller configured to control an output of the induction heating unit to have a value included in a range greater than 2.4 kW and less than 3.2 kW.

15. The drying apparatus of any one of claims 9 to 14, wherein the slurry comprises a solvent and an active material, a conductive material, and a binder dispersed in the solvent.
